# EUROPEAN PATENT SPECIFICATION

(11) **EP 4 524 526 B1**
(45) Date of publication and mention of the grant of the patent: **22.10.2025**
(21) Application number: 23197332.2
(22) Date of filing: 14.09.2023
(51) Int. Cl.: G01G 19/00, G01G 23/00

(54) **PROCESS AND SYSTEM FOR PROCESSING AND USING WEIGHING DATA**
PROZESS UND SYSTEM ZUR VERARBEITUNG UND VERWENDUNG VON WÄGEDATEN
PROCESSUS ET SYSTÈME DE TRAITEMENT ET D'UTILISATION DE DONNÉES DE PESAGE

(43) Date of publication of application: 19.03.2025
(73) Proprietor: Utilcell, s.r.o., 66481 Ostrovacice (CZ)
(72) Inventor: Truffin, Jorge, 66481 Ostrovacice (CZ)
(74) Representative: Garavelli, Paolo

(56) References cited:
- DE-A1- 102021 134 294
- US-A1- 2008 150 911

## Description

The present invention deals with a process and a system for processing and using weighing data.

Nowadays, weighing is performed by measuring the load to be weighted via sensors called load cells. Load cells are electronic transducers that pass the force applied by the mass to be measured into electric signals and one or more load cells interconnected create a weighing system. The load cells generate an electric signal in the range of millivolts, and this is used by an Electronic Display Unit (EDU) to be digitized and in most of the cases is represented in a display on the EDU. The EDU can also pass the measured value into a protocol to be used by a superior element like a Programmable Logic Controller (PLC) or a Human Machine Interface (HMI) to develop, for example, a manufacturing process like mixing materials with a manufacturing recipe. In the last years, load cells have already been digitized, so the output signal from the load cell is read as digital signal by the EDU or this signal can be used directly by a superior element. The measured data is used in this case for the process itself (packaging materials, dosing materials for manufacturing a specific recipe, etc.). This process is used in the food industry, chemical industry, packaging of goods, etc. It is important to understand that weighing is fundamental, since, without this weighing process, it is not possible to continue in the manufacturing process. For that reason, it is essential to keep the whole weighing system along with its electronics working at all times. The cost for maintaining, servicing and keeping up to date the weighing system is usually performed by external specialists. The cost of a halt of the production due to a failure in the weighing process represents a serious loss for the producer.

Document DE 10 2021 134294 A1 discloses an edge device and an electronic display unit. Document US 2008/150911 A1 discloses a hand-held electronic device, comprising a case having one or more major surfaces; a touch screen disposed on at least one of the major surfaces; a processor operably coupled to the touch screen.

Object of the present invention is solving the aforementioned prior art problems by providing a process and a cloud-based system for processing and using weighing data and which monitor continuously the technical situation of each sensor by reading the data produced by the EDU. Additionally, it is possible to read data from alternative sensors as temperature, relative humidity, vibration, pressure, concentration of specific gases, etc. that may have direct or indirect impact in the core process of weighing.

The above process and system are designed to revolutionize the weighing processes and the maintenance in various industries. By providing users with access to comprehensive data from their weighing systems, including load cell zero values, historical weighing and time of performed load on load cells, the present invention empowers businesses to enhance their maintenance strategies and optimize their weighing processes. This data-driven approach not only ensures efficient scale maintenance, but also leads to improved overall effectiveness and productivity for the end user's business. The present invention is based on technologies such as Industrial Internet of Things, Machine Learning, Artificial Intelligence and big data analytics.

The above and other objects and advantages of the invention, as will appear from the following description, are achieved with a process and a system like those claimed in their respective independent claims. Preferred embodiments and non-trivial variants of the present invention form the subject matter of the dependent claims.

It is understood that all attached claims form an integral part of the present description.

It will be immediately obvious that numerous variations and modifications can be made to what is described (for example relating to shape, dimensions, arrangements and parts with equivalent functionality) without departing from the scope of the invention, as appears from the attached claims.

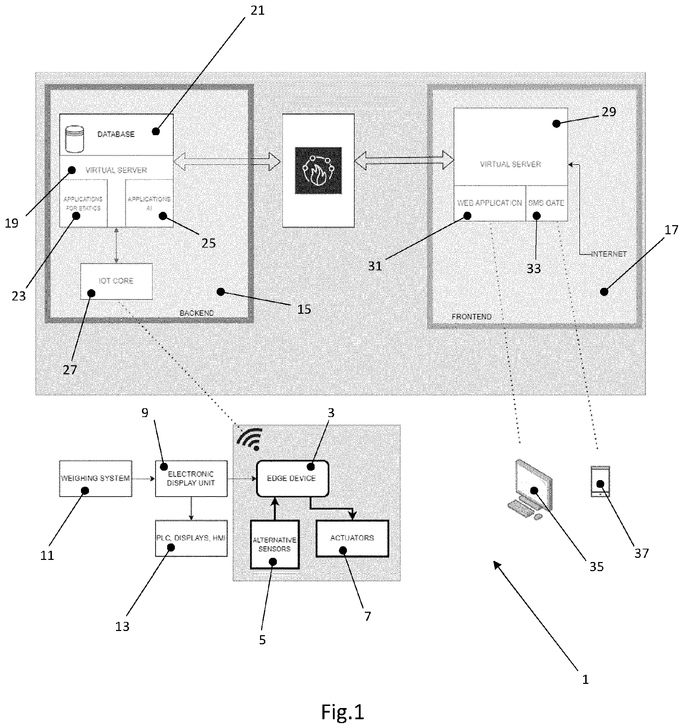

The present invention will be better described by some preferred embodiments thereof, provided as a nonlimiting example, with reference to the attached drawings, in which Figure 1 shows a block diagram of a preferred embodiment of the system of the present invention.

Regarding the definitions used in the present description:
Electronic Display Unit (EDU): Device which powers the sensor and digitizes its value and represents it on a display as a numeric value.

Load cell: A load cell is a transducer that converts a mechanical force or weight into an electrical signal.

Programmable Logic Controller (PLC) : is an industrial computer that has been ruggedized and adapted for the control of manufacturing processes, such as assembly lines, machines, robotic devices, or any activity that requires high reliability, ease of programming, and process fault diagnosis.

Human Machine Interface (HMI): It refers to the design and development of interfaces that enable people to interact with machines, such as computers, software, and other digital devices.

Cloud Computing: is the delivery of computing services over the Internet, allowing users to access and utilize resources such as storage, servers, and software on-demand without the need for a physical infrastructure or a direct management. It offers scalability, cost-efficiency, accessibility, and agility.

Machine Learning (ML): Machine Learning is a subfield of artificial intelligence that involves training algorithms to learn from data and make predictions or decisions without being explicitly programmed.

Artificial Intelligence (AI): Artificial Intelligence refers to the development of computer systems that can perform tasks that typically require human intelligence, such as learning, problem-solving, and decision-making. AI systems use algorithms and machine learning techniques to analyse data and make predictions or decisions based on that data.

Industrial Internet of Things (IIoT): refers to the integration of IoT technologies in industrial settings, such as manufacturing, logistics, and energy production, to improve efficiency, productivity, and decision-making. IIoT enables real-time monitoring and control of industrial processes, and predictive maintenance, among others.

Product as a Service (PaaS): is a business model where a company provides a product to customers on a subscription basis, rather than selling a one-time product. This allows customers to access the product without having to invest in the underlying infrastructure or technology.

With reference to Fig. 1, the system (1) of the present invention is employed for processing and using weighing data, and substantially comprises:
- an edge device (3) designed to read monitored weighing data from an Electronic Display Unit, EDU (9)
- a plurality of alternative sensors (5), including load cells, operatively connected to the edge device (3) and designed to send weighing signals to the Electronic Display Unit (9)
- a plurality of actuators (7), operatively connected to the edge device (3) and designed to perform actions following weighing results
- a weighing system (11), operatively connected to the Electronic Display Unit (9)
- a plurality of operating components (13), namely PLC, displays, HMI, operatively connected to the Electronic display unit (9) and designed to receive operating instructions following weighing results
- a back-end software cloud layer (15), communicatively connected to the edge device (3) in order to receive therefrom the monitored weighing data, and designed to operate as cloud computing environment, namely an environment of virtual servers and additional devices which can be deployed on a specific company hardware server or can be acquired as a service
- a front-end software cloud layer (17), communicatively connected to the back-end software cloud layer (15) and also being part of the cloud computing environment, the front-end software cloud layer (17) being designed to perform external accesses from the environment and to provide access from outside to the monitored weighing data processed by the environment.

In particular, the back-end software cloud layer (15) comprises:
- a back-end virtual server (19) designed to process the monitored weighing data received from the edge device (3), the back-end virtual server (19) comprising a plurality of applications, namely Machine Learning applications (23) and Artificial Intelligence applications (25), designed to process the monitoring weighing data through Machine Learning algorithms to perform tasks on the monitoring weighing data
- a database (21) operatively connected to the virtual server (19) and designed to store the monitored weighing data
- a IoT core (27) operatively connected to the back-end virtual server (19) and communicatively connected to the edge device (3).

Still in particular, the front-end software cloud layer (17) comprises:
- a front-end virtual server (29) comprising a Web application (31) and a SMS Gate (33) and operatively connected to an external network, for example Internet
- computer means operatively connected to the Web application and the SMS Gate.

Preferably, the computer means comprise personal computers, laptop computers, tablets, smartphones or similar components.

At the direct measurement level, the system (1) of the invention is compound of the edge device (3), a hardware device that is capable of reading data from the EDU (9), alternative sensors (5) (load cells included) and be connected to actuators (7) that might perform actions if required. This edge device (3) communicates the information obtained (this procedure is called monitoring) to a cloud computing environment. The cloud computing environment is an environment of virtual servers (19, 29) and additional services (23, 25, 31) that can be deployed on a specific company hardware server or can be acquired as a service (e.g. Amazon Web Services (AWS), Google Cloud Services (GCS), Microsoft (AZURE), etc.). As this service is a cloud one with access from any part of the world, it is very flexible. The data is sent from the edge device (3) to this Cloud computing environment via a wireless service (NB-IOT, 5G, etc.). The monitored data is stored in the database (21). The data is stored with one main objective, to be able to obtain historical view of the measurements and applying machine learning (ML) algorithms to perform various tasks on this data.

The invention also deals with a process for processing and using weighing data using the above-described system (1); the process comprises the steps of:
- reading, with the edge device (3), monitored weighing data from the Electronic Display Unit (9)
- sending, through the plurality of alternative sensors (5), including load cells, weighing signals from the weighing system (11) to the Electronic Display Unit (9)
- performing actions, through the plurality of actuators (7), following the weighing results
- sending to the plurality of operating components (13), namely PLC, displays, HMI, operating instructions following the weighing results
- sending from the edge device (3) to the back-end software cloud layer (15) the monitored weighing data
- through the front-end software cloud layer (17), performing external accesses from the environment and providing access from outside to the monitored weighing data processed by the environment.

In particular, on the back-end software cloud layer (15), the process comprises the steps of:
- through the back-end virtual server (19), processing the monitored weighing data received from the edge device (3) with the IoT core (27), using a plurality of applications, namely ML applications (23) and AI applications (25), designed to process the monitoring weighing data through Machine Learning algorithms to perform tasks on the monitoring weighing data
- storing the monitored weighing data on the database (21).

With the use of these tools, the system and process of the invention allow acquiring different resulting valuable data for the users:
- Trends on behaviours or each load cell and rest of the sensors to perform an analysis for predictive maintenance. (e.g. measuring the output of each load cell on zero during longer periods, can determine shift of zero and based on the speed of this shift, determine the predicted moment where the load cell is going to reach its limit of use)
- Mutual information (MI) analysis of each sensor in order to determine hidden parameters that may improve information on the production (e.g. MI between weighed poultry in a farm to obtain best results based on amount of food and water supplied, CO₂ concentrations during the day, temperature and RH in the place, etc.)
- Classification algorithms for establishing external factors influencing the accuracy of measurements (e.g. measuring the behaviour of the load cells under a silo can determine, after having monitored enough samples, if wind forces pushing on the silo are the source of the noise, and correct the measuring of supplied material during this moments with gusts of wind)
- Added value having a continuous checking of the system and supplying automated reports with the data acquired (e.g. managers of the company may have reports on the continuous measuring and reporting on anomalies out of range by the ML classification algorithms)
- Automated delivery of alarms by SMS, e-mail and phone calls with voice generated advice via Artificial Intelligence (AI) when reaching milestones predicted by the ML (e.g. measuring forces of struts in construction of basements, may run off range due temperature expansion of metal elements (no alarm) or by underground water pressure that can be a longer but more dangerous process, and need to be predicted and an alarm issued)
- Data driven decisions are improved by generating series of hidden correlations that can be observed only by long term monitoring.

The Cloud computing structure is divided between the backend, where has the stored data and the processing of data with the AI and ML tools, and the frontend, where there is an access to Internet and the web server, which gives access of the processed data to the client. The client gets the monitored data and the results of the processed data via a dashboard. Each client has a specific dashboard depending on measured data, type of processed data, etc. This process is a Product as a Service (PaaS) supplied with periodical payments of maintenance of the infrastructure, data processing and other programming services the client might require. This flexibility of software deployment that can be updated instantly as the client uses it via a web browser, is one main advantage compared with standard software packages.

## Claims

1. System (1) for processing and using weighing data, the system (1) comprising:
- an edge device (3) designed to read monitored weighing data from an Electronic Display Unit (9)
- a plurality of alternative sensors (5), including load cells, operatively connected to the edge device (3) and designed to send weighing signals to the Electronic Display Unit (9)
- a plurality of actuators (7), operatively connected to the edge device (3) and designed to perform actions following weighing results
- a weighing system (11), operatively connected to the Electronic Display Unit (9)
- a plurality of operating components (13), namely PLC, displays, HMI, operatively connected to the Electronic Display Unit (9) and designed to receive operating instructions following weighing results
- a back-end software cloud layer (15), communicatively connected to the edge device (3) in order to receive therefrom the monitored weighing data, and designed to operate as cloud computing environment, namely an environment of virtual servers and additional devices which can be deployed on a specific company hardware server or can be acquired as a service
- a front-end software cloud layer (17), communicatively connected to the back-end software cloud layer (15) and also being part of the cloud computing environment, the front-end software cloud layer (17) being designed to perform external accesses from the environment and to provide access from outside to the monitored weighing data processed by the environment.

2. System according to claim 1, wherein the back-end software cloud layer (15) comprises:
- a back-end virtual server (19) designed to process the monitored weighing data received from the edge device (3), the back-end virtual server (19) comprising a plurality of applications, namely Machine Learning applications (23) and Artificial Intelligence applications (25), designed to process the monitoring weighing data through Machine Learning algorithms to perform tasks on the monitoring weighing data
- a database (21) operatively connected to the virtual server (19) and designed to store the monitored weighing data
- a IoT core (27) operatively connected to the back-end virtual server (19) and communicatively connected to the edge device (3).

3. System according to claim 1 or 2, wherein the front-end software cloud layer (17) comprises:
- a front-end virtual server (29) comprising a Web application (31) and a SMS Gate (33) and operatively connected to an external network, for example Internet
- computer means operatively connected to the Web application and the SMS Gate.

4. System according to claim 3, wherein the computer means comprise personal computers, laptop computers, tablets or smartphones.

5. System according to any one of the previous claims, wherein the monitored weighing data, after being processed, provide one or more of the following results:
- Trends on behaviours or each load cell and rest of the sensors to perform an analysis for predictive maintenance
- Mutual information (MI) analysis of each sensor in order to determine hidden parameters that may improve information on the production
- Classification algorithms for establishing external factors influencing the accuracy of measurements
- Added value having a continuous checking of the system and supplying automated reports with the data acquired
- Automated delivery of alarms by SMS, e-mail and phone calls with voice generated advice via Artificial Intelligence when reaching milestones predicted by the Machine Learning
- Data driven decisions are improved by generating series of hidden correlations that can be observed only by long term monitoring.

6. Process for processing and using weighing data using the system (1) according to any one of the previous claims, the process comprising the steps of:
- reading, with the edge device (3), monitored weighing data from an Electronic Display Unit (9)
- sending, through a plurality of alternative sensors (5), including load cells, weighing signals from the weighing system (11) to the Electronic Display Unit (9)
- performing actions, through the plurality of actuators (7), following the weighing results
- sending to the plurality of operating components (13), namely PLC, displays, HMI, operating instructions following the weighing results
- sending from the edge device (3) to the back-end software cloud layer (15) the monitored weighing data
- through the front-end software cloud layer (17), performing external accesses from the environment and providing access from outside to the monitored weighing data processed by the environment.

7. Process according to claim 6, comprising, on the back-end software cloud layer (15), the steps of:
- through the back-end virtual server (19), processing the monitored weighing data received from the edge device (3) with the IoT core (27), using a plurality of applications, namely Machine Learning applications (23) and Artificial Intelligence applications (25), designed to process the monitoring weighing data through Machine Learning algorithms to perform tasks on the monitoring weighing data
- storing the monitored weighing data on the database (21).

8. Process according to claim 6 or 7, wherein the monitored weighing data, after being processed, provide one or more of the following results:
- Trends on behaviours or each load cell and rest of the sensors to perform an analysis for predictive maintenance
- Mutual information (MI) analysis of each sensor in order to determine hidden parameters that may improve information on the production
- Classification algorithms for establishing external factors influencing the accuracy of measurements
- Added value having a continuous checking of the system and supplying automated reports with the data acquired
- Automated delivery of alarms by SMS, e-mail and phone calls with voice generated advice via Artificial Intelligence when reaching milestones predicted by the Machine Learning
- Data driven decisions are improved by generating series of hidden correlations that can be observed only by long term monitoring.

## Patentansprüche

1. System (1) zur Verarbeitung und Nutzung von Wägedaten, wobei das System (1) umfasst:
- ein Bordgerät (3) zum Lesen der von einer elektronischen Anzeigeeinheit (9) überwachten Wiegedaten
- eine Vielzahl alternativer Sensoren (5), einschließlich Wägezellen, die betriebsmäßig mit der Bordvorrichtung (3) verbunden sind und dazu bestimmt sind, Wägesignale an die elektronische Anzeigeeinheit (9) zu senden
- eine Vielzahl von Aktuatoren (7), die betriebsmäßig mit dem Bordgerät (3) verbunden sind und dazu bestimmt sind, Aktionen infolge der Wiegeergebnisse auszuführen
- ein Wägesystem (11), das betriebsmäßig mit der elektronischen Anzeigeeinheit (9) verbunden ist
- eine Vielzahl von Bedienkomponenten (13), d. h. SPS, Anzeige, HMI, die betriebsmäßig mit der elektronischen Anzeigeeinheit (9) verbunden sind und dazu bestimmt sind, Bedienanweisungen infolge der Wiegeergebnisse zu empfangen
- eine Back-End-Software-Cloud-Schicht (15), die kommunikativ mit dem Bordgerät (3) verbunden ist, um die überwachten Wiegedaten von diesem zu empfangen, und die als Cloud-Computing-Umgebung betrieben werden kann, d. h. als Umgebung aus virtuellen Servern und zusätzlichen Geräten, die auf einem bestimmten Hardware-Server des Unternehmens bereitgestellt oder als Service erworben werden können
- eine Front-End-Cloud-Softwareschicht (17), die kommunikativ mit der Back-End-Cloud-Softwareschicht (15) verbunden ist und auch Teil der Cloud-Computing-Umgebung ist, wobei die Front-End-Cloud-Softwareschicht (17) dazu ausgelegt ist, einen externen Zugriff aus der Umgebung durchzuführen und einen externen Zugriff auf die von der Umgebung überwachten und verarbeiteten Wiegedaten bereitzustellen.

2. System nach Anspruch 1, wobei die Cloud-Schicht der Back-End-Software (15) umfasst:
- einen virtuellen Back-End-Server (19), der dazu bestimmt ist, die vom Bordgerät (3) empfangenen überwachten Wiegedaten zu verarbeiten, wobei der virtuelle Back-End-Server (19) eine Vielzahl von Anwendungen umfasst, nämlich Anwendungen für maschinelles Lernen (23) und Anwendungen für künstliche Intelligenz (25), die dazu bestimmt sind, die Überwachungswiegedaten durch Algorithmen des maschinellen Lernens zu verarbeiten, um Aufgaben an den Überwachungswiegedaten auszuführen
- eine Datenbank (21), die betriebsmäßig mit dem virtuellen Server (19) verbunden ist und zur Speicherung der überwachten Wiegedaten dient
- einen IoT-Kern (27), der betriebsmäßig mit dem virtuellen Back-End-Server (19) und kommunikativ mit dem Bordgerät (3) verbunden ist.

3. System nach Anspruch 1 oder 2, wobei die Cloud-Schicht der Front-End-Software (17) umfasst:
- einen virtuellen Front-End-Server (29), der eine Web-Anwendung (31) und ein SMS-Gate (33) umfasst und betrieblich mit einem externen Netzwerk, z. B. dem Internet, verbunden ist
- IT-Tool, das operativ mit der Webanwendung und dem SMS Gate verbunden ist.

4. System nach Anspruch 3, wobei die Rechenmittel Personalcomputer, Laptops, Tablets oder Smartphones umfassen.

5. System nach einem der vorhergehenden Ansprüche, wobei die überwachten Wiegedaten nach der Verarbeitung eines oder mehrere der folgenden Ergebnisse liefern:
- Trends zum Verhalten jeder Wägezelle und der übrigen Sensoren, um eine Analyse für die vorausschauende Wartung durchzuführen
- Analyse der gegenseitigen Information (MI) jedes Sensors, um versteckte Parameter zu bestimmen, die die Produktionsinformationen verbessern können
- Klassifizierungsalgorithmen zur Bestimmung externer Faktoren, die die Genauigkeit von Messungen beeinflussen
- Mehrwert durch kontinuierliche Kontrolle des Systems und Bereitstellung automatisierter Berichte mit den erfassten Daten
- Senden Sie automatisch Benachrichtigungen per SMS, E-Mail und Telefonanruf mit von künstlicher Intelligenz generierten Sprachempfehlungen, wenn durch maschinelles Lernen festgelegte Meilensteine erreicht werden
- Datengesteuerte Entscheidungen werden durch die Generierung einer Reihe versteckter Korrelationen verbessert, die nur durch langfristige Überwachung beobachtet werden können.

6. Ein Verfahren zum Verarbeiten und Verwenden von Wiegedaten durch das System (1) nach einem der vorhergehenden Ansprüche, wobei das Verfahren die folgenden Schritte umfasst:
- mit dem Bordgerät (3) die von einer elektronischen Anzeigeeinheit (9) überwachten Wiegedaten abzulesen
- Senden von Wägesignalen vom Wägesystem (11) über eine Vielzahl alternativer Sensoren (5), darunter Wägezellen, an die elektronische Anzeigeeinheit (9)
- Ausführen von Aktionen über die Vielzahl von Aktoren (7) in Abhängigkeit von den Wiegeergebnissen
- Senden von Bedienanweisungen an die mehreren Bedienkomponenten (13), d. h. SPS, Display, HMI, im Anschluss an die Wiegeergebnisse
- Senden der überwachten Wiegedaten vom Bordgerät (3) an die Cloud-Ebene der Back-End-Software (15)
- über die Cloud-Ebene der Front-End-Software (17) einen externen Zugriff aus der Umgebung durchführen und einen externen Zugriff auf die von der Umgebung überwachten und verarbeiteten Wiegedaten ermöglichen.

7. Verfahren nach Anspruch 6, das auf der Cloud-Ebene der Back-End-Software (15) die folgenden Schritte umfasst:
- über den virtuellen Back-End-Server (19) die vom Bordgerät (3) empfangenen überwachten Wiegedaten mit dem IoT-Kern (27) verarbeiten, und zwar unter Verwendung einer Vielzahl von Anwendungen, nämlich Anwendungen für maschinelles Lernen (23) und Anwendungen für künstliche Intelligenz (25), die dazu bestimmt sind, die Überwachungswiegedaten durch Algorithmen des maschinellen Lernens zu verarbeiten, um Aufgaben an den Überwachungswiegedaten auszuführen
- Speichern der überwachten Wiegedaten in der Datenbank (21).

8. Verfahren nach Anspruch 6 oder 7, wobei die überwachten Wiegedaten nach der Verarbeitung eines oder mehrere der folgenden Ergebnisse liefern:
- Trends zum Verhalten jeder Wägezelle und der übrigen Sensoren, um eine Analyse für die vorausschauende Wartung durchzuführen
- Analyse der gegenseitigen Information (MI) jedes Sensors, um versteckte Parameter zu bestimmen, die die Produktionsinformationen verbessern können
- Klassifizierungsalgorithmen zur Bestimmung externer Faktoren, die die Genauigkeit von Messungen beeinflussen
- Mehrwert durch kontinuierliche Kontrolle des Systems und Bereitstellung automatisierter Berichte mit den erfassten Daten
- Senden Sie automatisch Benachrichtigungen per SMS, E-Mail und Telefonanruf mit von künstlicher Intelligenz generierten Sprachempfehlungen, wenn durch maschinelles Lernen festgelegte Meilensteine erreicht werden
- Datengesteuerte Entscheidungen werden durch die Generierung einer Reihe versteckter Korrelationen verbessert, die nur durch langfristige Überwachung beobachtet werden können.

## Revendications

1. Système (1) pour l'élaboration et l'utilisation des données de pesature, le système (1) comprend:
- un appareil de bord (3) projeté pour lire les données de température surveillées par une unité de visualisation électronique (9)
- une pluralité de capteurs (5) alternatifs, avec celui du véhicule, fonctionnant en collaboration avec l'appareil de bord (3) et projetés pour transmettre des signaux de température à l'unité de visualisation électronique (9)
- une pluralité d'acteurs (7), des opérations collégiales avec l'appareil de bord (3) et des projets pour suivre les opérations à la suite des résultats de la situation
- un système de pesature (11), opérationnel collé à l'unité de visualisation électronique (9)
- une pluralité de composants opérationnels (13), notamment l'API, l'affichage, l'IHM, les unités opérationnelles collégiales de l'unité de visualisation électronique (9) et les projets permettant d'obtenir des installations opérationnelles ultérieures et les résultats de la situation
- un logiciel back-end cloud couche (15), connecté en mode communication avec l'appareil bordo (3) pour recevoir ces données de surveillance de la situation, et un projet pour les fonctions liées à l'environnement du cloud computing, qui va directement vers un environnement de serveur virtuel et des appareils supplémentaires qui peuvent être distribués sur un hardware server spécifique d'entreprise ou peut être acquis viens service
- un logiciel front-end cloud couche (17), connecté en mode communication avec le logiciel back-end cloud couche (15) et également une partie de l'environnement du cloud computing, le logiciel front-end cloud couche (17) est prévu pour accéder à l'environnement extérieur et pour accéder à l'exterieur aux données de situation surveillé et élaboré de l'ambiance.

2. Le système secondaire de la rivendicazione 1, dans le back-end du logiciel cloud couche (15), comprend:
- un serveur back-end virtuel (19) projeté pour élaborer des données de surveillance de la situation provenant de l'appareil de bord (3), le serveur back-end virtuel (19) comprend une pluralité d'applications, qui va directement aux applications d'apprentissage automatique (23) et aux applications d'intelligence artificielle (25), conçues pour élaborer les données, la pesature de surveillance utilisant des algorithmes d'apprentissage automatique pour suivre l'activité selon les données de pesature de surveillance
- une base de données (21) opérationnelle avec le serveur virtuel (19) et un projet de mémorisation des données de gestion moniteur
- un noyau IoT (27) connecté de manière opérationnelle au serveur back-end virtuel (19) et connecté en mode communication avec le périphérique bord (3).

3. Le système secondaire de la rivendicazione 1 ou 2, dans le logiciel front-end cloud couche (17) comprend:
- un serveur frontal virtuel (29) comprend une application Web (31) et un SMS Gate (33) et fonctionne avec un réseau externe, par exemple Internet
- un support informatique connecté opérationnellement à l'application Web et à SMS Gate.

4. Le système secondaire de la rivendicazione 3, dans lequel vos services informatiques comprennent un ordinateur personnel, un ordinateur portable, une tablette ou un smartphone.

5. Le système est basé sur les précédentes rives, dans les données de surveillance de la situation, après avoir été élaboré, fournissant un ou plusieurs des résultats suivants:
- Tendances de comportement de chaque cellule de charge et du reste des capteurs pour effectuer une analyse pour la maintenance prévisionnelle
- Analyse des informations reçues (MI) du capteur actuel pour déterminer les paramètres nascosti qui permettent d'améliorer les informations sur la production
- Algorithmes de classification pour la stabilité des graisses externes qui influencent la précision des erreurs
- Valeur ajoutée en utilisant un contrôle continu du système et un rapport automatique avec l'acquisition de données
- Envoi automatique d'alarmes par SMS, e-mail et téléphone avec des conseils vocaux générés par des informations artificielles pour le suivi prévisionnel du Machine Learning
- Les décisions basées sur ces données doivent être améliorées en générant une série de corrélations qui peuvent être utilisées seules pour faire un suivi jusqu'à la fin.

6. Méthode pour l'élaboration et l'utilisation des données de pesature à l'intérieur du système (1) en fonction des précédentes rives, la méthode comprend les étapes suivantes:
- lire, avec l'appareil de bord (3), les données de pesature surveillées par une unité de visualisation électronique (9)
- envoyez, en utilisant une pluralité de capteurs alternatifs (5), à partir de celui-ci, les signaux de pesature du système de pesature (11) jusqu'à l'unité de visualisation électronique (9)
- effectuer des actions, par l'intermédiaire de la pluralité d'actionneurs (7), à la suite des résultats de la pesature
inviter la pluralité des composants opérationnels (13), notamment l'API, l'affichage, l'IHM, les instruments opérationnels en suivant les résultats de la situation
- envoyer l'appareil du bord (3) au niveau cloud du logiciel back-end cloud couche (15) et les données de surveillance de la situation
- En passant par le cloud du logiciel front-end cloud couche (17), vous pourrez accéder à l'extérieur de l'environnement et fournir un accès à l'extérieur aux données de température surveillées et élaborées de l'environnement.

7. Méthode deuxième de la réunion 6, qui comprend le logiciel back-end cloud couche (15), en procédant comme suit:
- utiliser le serveur back-end virtuel (19), élaborer les données de surveillance de la situation du dispositif de bord (3) avec le noyau IoT (27), utiliser une pluralité d'applications, qui vont directement aux applications d'apprentissage automatique (23) et aux applications d'intelligence artificielle (25), créer des projets pour élaborer les données, la pesature de surveillance utilisant des algorithmes d'apprentissage automatique pour suivre l'activité selon les données de pesature de surveillance
- mémoriser les données de pesatura monitoringati sul base de données (21).

8. Selon la méthode de répartition 6 ou 7, dans les données de surveillance de la situation, après avoir été élaborées, vous recevrez un ou plusieurs des résultats suivants:
- Tendances de comportement de chaque cellule de charge et du reste des capteurs pour effectuer une analyse pour la maintenance prévisionnelle
- Analyse des informations reçues (MI) du capteur actuel pour déterminer les paramètres nascosti qui permettent d'améliorer les informations sur la production
- Algorithmes de classification pour la stabilité des graisses externes qui influencent la précision des erreurs
- Valeur ajoutée en utilisant un contrôle continu du système et un rapport automatisé avec les données acquisition
- Envoi automatique d'alarmes par SMS, e-mail et téléphone avec des conseils vocaux générés par des informations artificielles pour le suivi prévisionnel du Machine Learning
- Les décisions basées sur ces données doivent être améliorées en générant une série de corrélations qui peuvent être utilisées seules pour faire un suivi jusqu'à la fin.
